# EUROPÄISCHE PATENTANMELDUNG

(11) **EP 0 911 075 A1**
(43) Veröffentlichungstag der Anmeldung: **28.04.1999**
(21) Anmeldenummer: 98119544.9
(22) Anmeldetag: 15.10.1998
(51) Int. Cl.: B01J 8/02, B01J 8/04, B01D 53/04

(54) **Reaktor mit ringförmiger Schüttung**

(30) Priorität: 22.10.1997 DE 19746698
(71) Anmelder: Linde Aktiengesellschaft, 65189 Wiesbaden (DE)
(72) Erfinder: Von Gemmingen, Ulrich, Dr. Dipl.-Phys., 80797 München (DE)
(74) Vertreter: Zahn, Christoph

(57) **Zusammenfassung**

Reaktor, der im wesentlichen zylindersymmetrisch um eine im wesentlichen vertikal verlaufende Achse aufgebaut ist und einen Mantel und innerhalb des Mantels wenigstens eine ringförmige Schüttung aufweist, welche mit rieselfähigem Material gefüllt ist und durch ein inneres und ein äußeres Gitter sowie an ihrer Unterseite durch einen von unten her am Mantel abgestützten Boden begrenzt ist. Bei einer gleichzeitigen Vermeidung eines Bypasses im Kopfbereich des Reaktors soll zudem möglichst wenig adsorptiv bzw. reaktiv nicht durchströmte Schüttung als Totraum verbleiben, so daß die Verluste an Produktkomponenten bei der Druckabsenkung reduziert werden können. Dies wird erfindungsgemäß dadurch erreicht, daß Mittel zur Verbreiterung der Schüttung (9, 9') im Kopfbereich des Reaktors vorgesehen sind.

So kann z. B. im oberen Bereich des Reaktors das äußere bzw. äußerste Gitter (6) gasdurchlässig mit dem Reaktormantel (7) verbunden sein (4), während sich das bzw. die inneren Gitter (5, 5') konisch nach außen verbreitern (2, 2').

Der erfindungsgemäße Reaktor eignet sich insbesondere für Druckwechseladsorptionsverfahren, bei denen das zu reinigende oder zu zerlegende Gasgemisch die Schüttung (9) während der Adsorptionsphase von außen nach innen durchströmt und die Druckabsenkung im Gegenstrom, also von innen nach außen erfolgt.

## Beschreibung

Die Erfindung betrifft einen Reaktor, der im wesentlichen zylindersymmetrisch um eine im wesentlichen vertikal verlaufende Achse aufgebaut ist und einen Mantel und innerhalb des Mantels wenigstens eine ringförmige Schüttung aufweist, welche mit rieselfähigem Material gefüllt ist und durch ein inneres und ein äußeres Gitter sowie an ihrer Unterseite durch einen von unten her am Mantel abgestützten Boden begrenzt ist.

Ferner betrifft die Erfindung die Verwendung des erfindungsgemäßen Reaktors für Druckwechseladsorptionsverfahren.

Für Reaktoren der gattungsbildenden Art - wie sie z. B. aus der EP-PS 0 402 783 bekannt sind - besteht ein weiter Anwendungsbereich. Sie können für die verschiedensten Reaktionen zwischen einem Gas und einem aktiven Material, welches in rieselfähiger Form vorliegt, eingesetzt werden. Das aktive Material kann beispielsweise ein Adsorbens oder ein Katalysator sein. Der Reaktor kann mehrere Arten von aktivem Material enthalten und aus mehr als einem Bett bzw. einer Schüttung bestehen. Eine Schüttung wird in diesem Fall von einer benachbarten Schüttung konzentrisch umschlossen.

Während der Reaktionsphase wird ein Reaktionsgas in etwa radial zur Symmetrieachse des Reaktors durch das mit aktivem, rieselfähigem Material gefüllte Bett geführt, indem es beispielsweise dem Raum zwischen Mantel und äußerem Korb bzw. äußerem Gitter zugeleitet und von dem Raum innerhalb des inneren Korbes bzw. inneren Gitters wieder abgezogen wird. Im Falle einer Adsorptionsreaktion nimmt die Reaktionsfähigkeit des aktiven Materials (Adsorbens) mit zunehmender Reaktionsdauer ab. Daher muß das Adsorbens in regelmäßigen Zeitabständen regeneriert werden.

Diese Regenerierung des Adsorbens kann prinzipiell auf zwei unterschiedliche Arten erfolgen. So kann zum einen während der Regenerierphase ein Regeneriergas, das gegenüber dem zu reinigenden eine andere chemische Zusammensetzung und/oder einen anderen thermodynamischen Zustand aufweist, durch die Schüttung aus aktivem Material geleitet werden. In der Regel weist das durch die Schüttung aus aktivem Material geleitete Regeneriergas eine höhere Temperatur als das während der Adsorptionsphase durch die Schüttung geleitete Gasgemisch auf; man spricht dann von einem sog. T(emperature)S(wing)A(dsorption)-Prozeß. Die Regenerierung des beladenen Adsorbens kann jedoch auch durch eine Druckabsenkung innerhalb der Schüttung bewirkt werden; man spricht dann von einem sog. P(ressure)S(wing)-A(dsorption)-Prozeß. Selbstverständlich sind dem Fachmann eine Vielzahl von Mischformen aus TSA- und PSA-Prozessen bekannt.

Die in dem Reaktor stattfindende Reaktion kann z.B. in einer adsorptiven Trennung von Gasgemischen oder in einer adsorptiven Entfernung von unerwünschten Bestandteilen aus einem zu reinigenden Gas bestehen. Ein praktisches Beispiel für letzteres ist die Abscheidung von Wasser und/oder Kohlendioxid aus Luft, die einer Tieftemperaturluftzerlegungsanlage zugeführt wird. Das rieselfähige Material, welches in das Schüttbett eingebracht wird, wirkt in diesem Falle als Adsorbens und kann beispielsweise aus einem Molekularsieb, Zeolith und/oder Alugel bestehen.

Während der Reaktions- bzw. Adsorptionsphase wird die zu reinigende Luft durch das Bett bzw. die Schüttung geführt und dabei Wasser und/oder Kohlendioxid an das aktive Material abgegeben, also an diesem adsorbiert. Während der Regenerierphase werden die aus der Luft entfernten Stoffe wieder desorbiert, indem ein Regenerier-gas, beispielsweise Stickstoff, durch das Bett mit dem Adsorbens geleitet wird. Dabei herrschen im allgemeinen - wie oben angesprochen - andere Temperaturen und/oder Drücke als während der Adsorptionsphase.

Ein Reaktor der eingangs genannte Art kann außerdem für katalytische Reaktionen eingesetzt werden, beispielsweise zur Entfernung von NO_{X} aus dem Abgas von Verbrennungsanlagen. Das rieselfähige Material besteht in diesem Fall z. B. aus metalldotierten Molekularsieb-Teilchen.

Ein zentrales Problem bei der Konstruktion eines Reaktors dieser Art besteht darin, daß sog. Bypassströmungen im Kopfbereich des Reaktors vermieden werden müssen. Zu diesem Zweck ist im Kopfbereich des Reaktors ein nicht oder gering durchströmter Totraum mit Schüttmaterial vorgesehen, der die nach dem Einfüllen und der Inbetriebnahme unvermeidliche Schüttverdichtung von 2 bis 5 % und das mit ihr verbundene Absinken der Schüttung kompensiert.

Reaktoren der eingangs genannten Art werden auch bei druckwechselregenerierten Adsorptionsanlagen mit großem Durchsatz, wie z. B. bei sog. "Heatless Dryern" oder vakuumregenerierten PSA-Prozessen zur O₂-Gewinnung aus Luft oder zur CO₂-Abtrennung aus Hochofengasen eingesetzt. Bei diesen PSA-Prozessen sind die Druckverluste in der Regenerierphase möglichst niedrig zu halten. Insbesondere bei einem Betrieb mit Adsorption von außen nach innen - dies bedeutet, daß das Einsatzgas die Schüttung radial von außen nach innen durchströmt - und Regenerierung durch Druckabsenkung und Begleitspülung von innen nach außen, ist jeweils am Ort des größten Gasaufkommens auch die Durchtrittsfläche am größten und somit der Gesamtdruckverlust am geringsten. Diese Tatsache unterstützt die Desorption wirksam und verbessert somit die Arbeitsbeladung.

Da bei den druckwechselregenerierten Adsorbern nur geringe Temperaturspannen durch Adsorptions- und Desorptionswärmen auftreten, können die Gitter zur Einspannung der Schüttung bspw. als Lochbleche ohne besondere Maßnahmen zur Kompensation von Temperaturgängigkeiten ausgebildet sein; hierdurch erniedrigen sich die Herstellungskosten für den Reaktor erheblich.

Das zentrale Problem beim Einsatz von radial durchströmten Reaktoren besteht bei PSA-Prozessen jedoch darin, daß die Verluste aus der oberen Totraumzone durch die nunmehr häufigen Druckwechsel - die Umschaltung zwischen Ad- und Desorptionsphasen erfolgt zwischen 0,5 und 10 Minuten - merklich werden und dadurch bei der bloßen Übertragung der bekannten Reaktorkonstruktionen, die insbesondere bei TSA-Prozessen Verwendung finden, keine attraktive Prozeßgestaltung mehr ermöglichen.

Der Erfindung liegt daher die Aufgabe zugrunde, den Reaktor der eingangs genannten Art dahingehend weiterzuentwickeln, daß bei einer gleichzeitigen Vermeidung eines Bypasses im Kopfbereich des Reaktors möglichst wenig adsorptiv bzw. reaktiv nicht durchströmte Schüttung als Totraum verbleibt, so daß die Verluste an Produktkomponenten bei der Druckabsenkung reduziert werden können.

Diese Aufgabe wird dadurch gelöst, daß Mittel zur Verbreiterung der Schüttung im Kopfbereich des Reaktors vorgesehen sind.

Diese Mittel zur Verbreiterung der Schüttung im Kopfbereich des Reaktors können gemäß einer Ausgestaltung des erfindungsgemäßen Reaktors z. B. folgendermaßen ausgebildet sein: Im oberen Bereich des Reaktors ist das äußere Gitter gasdurchlässig mit dem Reaktormantel verbunden und das bzw. die inneren Gitter verbreitern sich konisch nach außen.

Mittels dieser konstruktiven Maßnahmen wird eine Verbreiterung der Schüttung(en) im Kopfbereich des Reaktors erzielt, die zum einen eine Verringerung der Schüttabsenkung durch Verdichtung und eine Verringerung der damit verbundenen Bypassgefahr durch die oben vergrößerte Grundfläche bewirkt. Zum anderen wird eine wesentliche konstruktive Vereinfachung gegenüber bekannten Reaktorkonstruktionen mit kalottenförmigen Außen- und Innengittern erreicht. Ferner wird so eine gleichmäßige Durchströmung im Kopfbereich durch das bzw. die konisch verbreiterten Innengitter erzielt, wodurch der Strömungswiderstand gerade im eher schlecht durchströmten Kopfbereich des Reaktors durch die wesentliche Vergrößerung der inneren Durchtrittsfläche verringert wird.

Gemäß einer weiteren vorteilhaften Ausgestaltung des erfindungsgemäßen Reaktors verbreitern sich das bzw. die inneren Gitter mit einem Winkel von 1 bis 45° zu der im wesentlichen vertikal verlaufenden Achse nach außen. Das äußere bzw. äußerste Gitter ist - den erfindungsgemäßen Reaktor in vorteilhafter Weise weiterbildend - in einem Winkel von 0 bis 45° zu der Horizontalen mit dem Reaktormantel verbunden.

Den erfindungsgemäßen Reaktor weiterbildend wird vorgeschlagen, daß sich das bzw. die inneren Gitter vorzugsweise in der Höhe, in der das äußere Gitter gasdurchlässig mit dem Reaktormantel verbunden ist, nach außen verbreitern.

Der Abstand zwischen der Verbindung zwischen dem äußeren Gitter und dem Reaktormantel und dem oberen Reaktorrand beträgt vorzugsweise zwischen 80 und 130 % der radialen Schüttdicke der Schüttung.

Die Erfindung wird nun anhand zweier in den Zeichnungen dargestellter Ausführungsbeispiele näher erläutert.

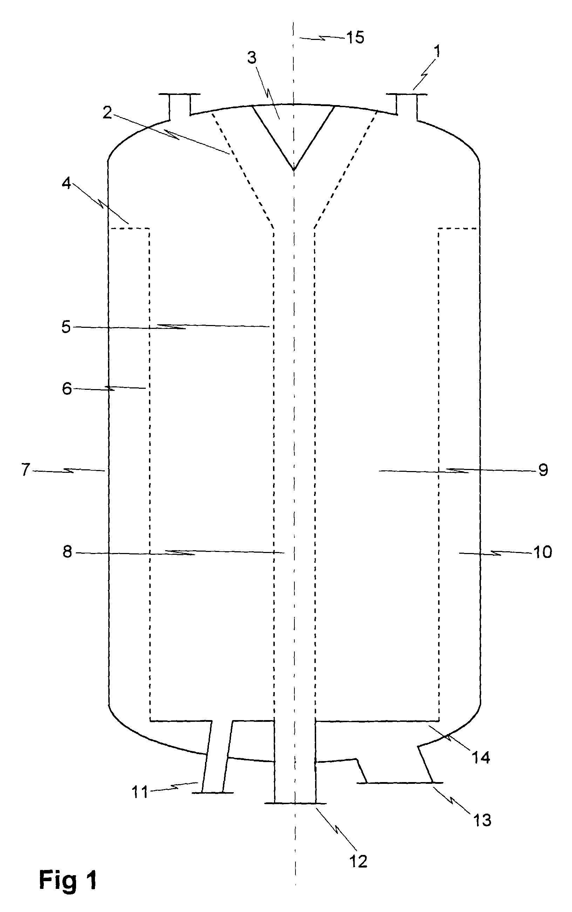

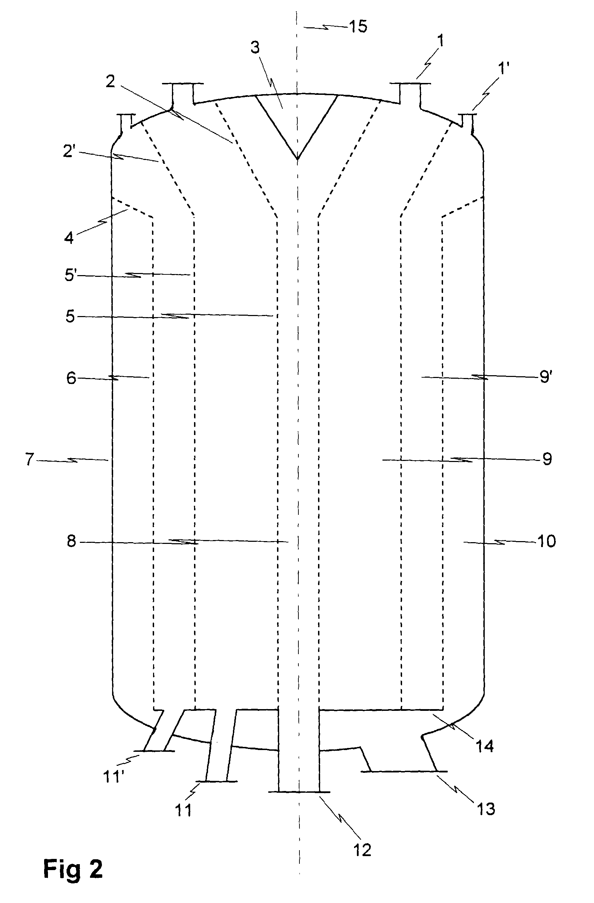

Die Figuren 1 und 2 zeigen den prinzipiellen Aufbau beispielhafter Ausführungs-formen des erfindungsgemäßen Reaktors mit ihren wesentlichen Merkmalen. Die Darstellungen sind der Einfachheit halber sehr schematisch ausgeführt, insbesondere entsprechen die Verhältnisse zwischen den äußeren Abmessungen des Reaktors und den Materialdicken nicht den wirklichen Maßen.

Der Reaktor - wie in den Figuren 1 und 2 dargestellt - ist im wesentlichen zylindersymmetrisch um die Achse 15 aufgebaut. Er wird nach außen durch einen Mantel 7 begrenzt, welcher eine obere und eine untere Kalotte aufweist. Die obere Kalotte weist einen oder mehrere Stutzen 1 zum Einfüllen des Schüttmaterials auf. Weist der Reaktor zwei oder mehr Schüttungen 9, 9' auf, so sind, wie in der Figur 2 dargestellt, separate Stutzen 1, 1' zum Einfüllen der Schüttmaterialien vorzusehen. In der unteren Kalotte sind Eintritts- 13 und Austrittsöffnungen 12 für das dem Reaktor zu- bzw. abzuführende Gas bzw. Gasgemisch vorgesehen. Zusätzlich sind Ablassstutzen 11, 11' für die rieselfähigen Schüttmaterialien vorzusehen. Die Bestimmung der erforderlichen Anzahl an Stutzen 1, 1', die für eine gleichmäßige und vollständige Befüllung der Schüttungsräume mit dem bzw. den Schüttmaterialien erforderlich sind, ist dem fachmännischen Können zuzurechnen.

Figur 1 zeigt den erfindungsgemäßen Reaktor, in dessen Inneren eine ringförmige Schüttung 9 angeordnet ist; diese ist durch zwei zylindermantelförmige Körbe bzw. Gitter - ein äußeres 6 und ein inneres Gitter 5 - begrenzt. Die Schüttung 9 wird nach unten hin durch den Boden 14 abgeschlossen, welcher in der Regel über sternförmig angeordnete Rippen, die in der Figur der Übersichtlichkeit halber nicht dargestellt sind, starr an der unteren Kalotte des Mantels 7 befestigt ist. Die Schüttung 9 besteht aus rieselfähigem Material. In der konkreten Verwendung des Reaktors handelt sich es um adsorptives Material, ebensogut könnte jedoch auch ein rieselfähiger Katalysator eingefüllt sein.

Erfindungsgemäß ist das äußere Gitter 6 im oberen Bereich des Reaktors gasdurchlässig über ein Verbindungsgitter 4 mit dem Reaktormantel 7 verbunden und das innere Gitter 5 verbreitert sich in diesem Bereich konisch nach außen (2).

Das zu reinigende Gas, beispielsweise Luft, strömt über die Einlaßöffnung 13 in den unteren Bereich des Reaktors ein, wird durch die Unterseite des Bodens 14 umgelenkt und dabei gegebenenfalls tropfbares Wasser abgeschieden. Anschließend wird das Gas in den äußeren Ringraum 10 zwischen Mantel 7 und äußerem Gitter 6 geleitet. Von dort strömt das Gas mit einer radialen Komponente durch die Schüttung 9 bzw. das Adsorptionsbett in den inneren Ringraum 8. In demjenigen Bereich des Ringraumes 8, in dem sich das innere Gitter 2 verbreitert, ist vorzugsweise ein Verdrängerkegel 3 angeordnet. Dieser Verdrängerkegel 3 verringert zum einen den gasseitigen Totraum und ermöglicht zum anderen ein besseres Durchströmen des Kopfbereiches der Schüttung.

Aus dem Ringraum 8 wird das gereinigte Gas über die Austrittsöffnung 12 wieder aus dem Reaktor abgezogen.

Falls bei der Reaktion eine Regenerierung erforderlich ist, wird während der Regenerierphase ein Regeneriergas, beispielsweise Stickstoff, in umgekehrter Richtung durch die Schüttung 9 geführt.

Figur 2 zeigt - im Unterschied zu der Reaktorkonstruktion, wie sie in der Figur 1 dargestellt ist - den erfindungsgemäßen Reaktor, in dessen Inneren zwei ringförmige Schüttungen 9, 9' angeordnet sind; während die äußere Schüttung 9' durch die beiden zylinder-mantelförmigen Körbe bzw. Gitter 6 und 5' begrenzt wird, wird die innere Schüttung 9 durch die beiden zylindermantelförmigen Gitter 5' und 5 begrenzt. Wie bereits erwähnt sind für jede Schüttung 9, 9' separate Stutzen zum Einfüllen 1, 1' und Ablassen 11, 11' der Schüttmaterialien vorzusehen.

Auch Im Falle zweier oder mehrerer Schüttungen 9, 9' ist wiederum das äußerste Gitter 6 im oberen Bereich des Reaktors gasdurchlässig über z. B. ein Verbindungsgitter 4 mit dem Reaktormantel 7 verbunden. Die inneren Gitter 5, 5' verbreitern sich in dem oberen Bereich des Reaktors konisch nach außen. Während das äußere bzw. äußerste Gitter 6 in einem Winkel von 0 bis 45° zu der Horizontalen mit dem Reaktormantel 7 verbunden ist, verbreitern sich die inneren Gitter 5, 5' mit einem Winkel von 1 bis 45° zu der im wesentlichen vertikal verlaufenden Achse 15 des Reaktors nach außen 2, 2'.

Der erfindungsgemäße Reaktor eignet sich insbesondere für Druckwechseladsorptionsverfahren, bei denen das zu reinigende oder zu zerlegende Gasgemisch die Schüttung 9 während der Adsorptionsphase von außen nach innen durchströmt und die Druckabsenkung im Gegenstrom, also von innen nach außen erfolgt.

Nachfolgend seien beispielhaft Konstruktionsangaben sowie Parameter für den erfindungsgemäßen Reaktor bei der Verwendung zweier parallel angeordneter Reaktoren in einer Vakuumdruckwechsel-adsorptionsanlage für die Sauerstoff-Gewinnung angegeben:
- Lufteintritt:: 10 000 Nm³/h, 1 bar, 20°C, Adsorptionslaufzeit 35 Sekunden
- Regenerierung:: Vakuumpumpe mit 20 000 m³/h effektiv Saugleistung, Enddruck 0,15 bar
- Behälter:: Außendurchmesser 3,2 m
Außengittermolsieb: Durchmesser 3,0 m
Innengittermolsieb: Durchmesser 0,6 m
Gesamthöhe 4,8 m
Kopfbereich von 3,8 bis 4,8 m Höhe
Innengitterdurchmesser an der oberen Behälterwand 1,0 m
Konuswinkel 11,3°
Molsiebmenge 18 500 kg, davon durchströmt 17 800 kg
(entspricht 97 %)

## Patentansprüche

1. **Reaktor**, der im wesentlichen zylindersymmetrisch um eine im wesentlichen vertikal verlaufende Achse aufgebaut ist und einen Mantel und innerhalb des Mantels wenigstens eine ringförmige Schüttung aufweist, welche mit rieselfähigem Material gefüllt ist und durch ein inneres und ein äußeres Gitter sowie an ihrer Unterseite durch einen von unten her am Mantel abgestützten Boden begrenzt ist, **dadurch gekennzeichnet**, daß Mittel zur Verbreiterung der Schüttung (9, 9') im Kopfbereich des Reaktors vorgesehen sind.

2. Reaktor nach Anspruch 1, dadurch gekennzeichnet, daß im oberen Bereich des Reaktors das äußere bzw. äußerste Gitter (6) gasdurchlässig mit dem Reaktormantel (7) verbunden ist (4) und sich das bzw. die inneren Gitter (5, 5') konisch nach außen verbreitern (2, 2').

3. Reaktor nach Anspruch 1 oder 2, dadurch gekennzeichnet, daß das äußere bzw. äußerste Gitter (6) in einem Winkel von 0 bis 45° zu der Horizontalen mit dem Reaktormantel (7) verbunden ist (4).

4. Reaktor nach einem der vorhergehenden Ansprüche, dadurch gekennzeichnet, daß sich das bzw. die inneren Gitter (5, 5') mit einem Winkel von 1 bis 45° zu der im wesentlichen vertikal verlaufenden Achse (15) nach außen verbreitern (2, 2').

5. Reaktor nach einem der vorhergehenden Ansprüche, dadurch gekennzeichnet, daß sich das bzw. die inneren Gitter (5, 5') vorzugsweise in der Höhe, in der das äußere Gitter (6) gasdurchlässig mit dem Reaktormantel (7) verbunden ist, nach außen verbreitern (2, 2').

6. Reaktor nach einem der vorhergehenden Ansprüche, dadurch gekennzeichnet, daß der Abstand zwischen der Verbindung zwischen dem äußeren bzw. äußersten Gitter (4) und dem Reaktormantel (7) und dem oberen Reaktorrand zwischen 80 und 130 % der radialen Schüttdicke der Schüttung (9) beträgt.

7. Reaktor nach einem der vorhergehenden Ansprüche, dadurch gekennzeichnet, daß im wesentlichen in dem Bereich, in dem sich das bzw. die inneren Gitter (5, 5') nach außen verbreitern (2, 2'), in dem innerhalb der Schüttung(en) (9, 9') angeordneten Ringraum (8), der der Gaszuführung und/oder Gasabführung dient, ein Verdrängerkörper (3), der das Volumen des Ringraumes (8) verkleinert, angeordnet ist.

8. **Verwendung** eines Reaktor nach einem der Ansprüche 1 bis 7 für Druckwechseladsorptionsverfahren, dadurch gekennzeichnet, daß das zu reinigende oder zu zerlegende Gasgemisch die Schüttung (9) während der Adsorptionsphase von außen nach innen durchströmt und die Druckabsenkung im Gegenstrom, also von innen nach außen erfolgt.
